(19) Europäisches Patentamt
European Patent Office
Office européen des brevets

(11) **EP 3 452 252 B1**

(12) **FASCICULE DE BREVET EUROPEEN**

(45) Date de publication et mention de la délivrance du brevet:
**12.02.2020 Bulletin 2020/07**

(51) Int Cl.:
**B24B 9/10** *(2006.01)* **C03C 19/00** *(2006.01)*
**B32B 17/10** *(2006.01)* **C03B 27/04** *(2006.01)*

(21) Numéro de dépôt: **17725321.8**

(86) Numéro de dépôt international:
**PCT/FR2017/051039**

(22) Date de dépôt: **02.05.2017**

(87) Numéro de publication internationale:
**WO 2017/191401 (09.11.2017 Gazette 2017/45)**

(54) **FACONNAGE DE VERRE APRES TREMPE**

ABSCHRÄGUNG VON GLASKANTEN NACH THERMISCHER HÄRTUNG

CHAMFERING OF GLASS FOLLOWING THERMAL STRENGTHENING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2016 FR 1653984**

(43) Date de publication de la demande:
**13.03.2019 Bulletin 2019/11**

(73) Titulaire: **Saint-Gobain Glass France 92400 Courbevoie (FR)**

(72) Inventeurs:
• **DECOURCELLE, Romain 60280 Margny Les Compiegne (FR)**
• **BAQUET, Erwan 60200 Compiegne (FR)**
• **SWIDERSKI, Christophe 02700 Amigny Rouy (FR)**

(74) Mandataire: **Saint-Gobain Recherche B.P. 135 39, quai Lucien Lefranc 93303 Aubervilliers Cedex (FR)**

(56) Documents cités:
**WO-A1-2007/135335 US-A- 5 939 175 US-A1- 2014 212 649**

• **DATABASE WPI Week 200835 21 février 2008 (2008-02-21) Thomson Scientific, London, GB; AN 2008-F36328 XP002765326, -& WO 2008/020509 A1 (ASAHI GLASS CO LTD) 21 février 2008 (2008-02-21)**
• **DATABASE WPI Week 201449 7 juillet 2014 (2014-07-07) Thomson Scientific, London, GB; AN 2014-M85976 XP002765327, -& JP 2014 125399 A (ASAHI GLASS CO LTD) 7 juillet 2014 (2014-07-07)**

**Description**

L'invention concerne le domaine de la fabrication de plaques comprenant une feuille de verre minéral renforcée thermiquement et façonnée.

Une feuille de verre minéral est habituellement façonnée avant tout renforcement thermique. Le façonnage est toute opération produisant un enlèvement de matière comme une découpe, un usinage, un meulage, un polissage. En effet, il est accepté par l'homme du métier qu'un renforcement thermique produit des contraintes dans le verre telles que tout façonnage exercé directement sur le verre renforcé thermiquement conduit à la casse brutale et totale de la feuille, avec formation d'une multitude de petits morceaux. Ainsi, pour l'homme du métier, toute opération d'usinage (découpe ou façonnage) est théoriquement rendue impossible par l'état de contrainte interne du verre renforcé thermiquement. Selon l'art antérieur, toute erreur de dimensionnel de la plaque de verre ne peut donc être rattrapée après l'opération de durcissement thermique.

Par ailleurs, lors de l'assemblage en feuilleté de plusieurs feuilles de verres renforcées thermiquement, il peut apparaitre un décalage du bord d'une feuille par rapport à l'autre. Ce décalage du bord du verre n'est parfois pas acceptable, surtout si l'esthétique du produit impose que le bord soit libre, c'est-à-dire non pris dans une feuillure ou non caché par un joint. Habituellement, l'homme du métier ne prend cependant pas le risque d'aligner les bords des feuilles par meulage de peur de provoquer la casse de la vitre feuilletée.

Enfin, la préparation d'une plaque avec un façonnage particulier, notamment du type Clip'In® selon lequel une rainure est exercée dans la tranche (c'est-à-dire le chant) d'une feuille de verre et parallèlement aux faces principales du verre (voir ce type d'assemblage dans WO2007/135335), est généralement conditionné sur le site industriel sur lequel le façonnage a été réalisé. Selon la technique traditionnelle, le façonnage doit être réalisé avant l'étape de durcissement thermique. Les sites industriels réalisant ce façonnage et ne disposant pas de moyens de durcissement thermique doivent ainsi réaliser le façonnage Clip'In® sur les verres à dimension, puis les envoyer sur un autre site industriel pour y subir le durcissement thermique, pour enfin les faire revenir sur le site précédent avant envoi au client. La logistique et les délais de production sont donc fortement impactés par cette contrainte de ne pouvoir réaliser l'opération de façonnage sur des verres à dimension ayant déjà subis l'opération de traitement thermique.

WO2008020509 A1 fait référence à un procédé de fabrication d'une feuille de verre renforcée thermiquement, comprenant le façonnage du chant avant l'application du renforcement thermique.

L'invention remédie aux problèmes susmentionnés en permettant de réaliser le façonnage après l'étape de durcissement thermique. L'invention s'adresse à tout type de plaque comprenant au moins une feuille de verre renforcée thermiquement. La plaque, notamment du type vitrage, peut ne comprendre qu'une seule feuille de verre renforcée thermiquement ou comprendre plusieurs feuilles de verre renforcées thermiquement. Notamment, il peut s'agir d'une plaque feuilletée, notamment un vitrage feuilleté, les différentes feuilles de verre minéral, renforcées thermiquement ou non étant séparées par un matériau polymère, notamment du type polyvinyle de butyrale (PVB). Le terme plaque recouvre tout type de vitrage ou miroir, plan ou bombé.

Pour mieux illustrer l'objet de la présente invention, on en décrit ci-après, à titre indicatif et non limitatif, divers modes de réalisation particuliers avec référence aux dessins annexés.

La figure 1 représente une rainure dite Clip'In® réalisée dans le chant d'une feuille de verre en coupe.
La figure 2 schématise le procédé de réalisation de la rainure dite Clip'In®.
La figure 3 représente une feuille de verre en coupe vue parallèlement à ses faces principales 1 et 2 avec, en hachuré, sa ceinture de compression.

L'invention concerne en premier lieu un procédé de fabrication d'une plaque comprenant une feuille de verre minéral renforcée thermiquement, comprenant le façonnage du chant de la feuille de verre après application du renforcement thermique et sur une profondeur à partir du bord, inférieure à celle de la zone de compression. La profondeur de la zone de compression correspond à la plus petite distance entre le chant du verre et la limite entre la zone de compression et la zone en traction. Dans le cadre de la présente demande, cette limite correspond à la ligne noire (première frange noire par rapport au bord) apparaissant par le dispositif de Sharples, bien connu de l'homme du métier (en anglais : « Sharples Edge Stress Meter »). Cette limite peut également être déterminée par polariscopie ou par un contrôleur de bord à compensation de Babinet. Ainsi, le façonnage est réalisé sur une profondeur de préférence inférieure à 90% et de préférence inférieure à 80% de la profondeur à partir du bord et jusqu'à la ligne noire (le milieu de cette ligne) mise en évidence par le dispositif de Sharples. L'invention concerne donc un procédé de fabrication d'une plaque comprenant une feuille de verre minéral renforcée thermiquement, comprenant le façonnage du chant de la feuille de verre après application du renforcement thermique et sur une profondeur à partir du bord, allant jusqu'à la ligne noire (le milieu de cette ligne) mise en évidence par le dispositif de Sharples.

Notamment, le façonnage est réalisé sur une profondeur à partir du bord du verre suffisamment faible pour que la contrainte à rupture en flexion au 5% fractile reste supérieure à 120 MPa après ledit façonnage. Le façonnage comprend au moins une passe de meulage. Cela signifie qu'après façonnage, la contrainte en flexion pour laquelle la probabilité d'avoir 5% de rupture, est supérieure à 120 MPa, conformément à la norme EN12150-1 (voir son § 9.4) des vitrages trempés pour bâtiment. Ces valeurs sont déterminées à partir de tests de rupture en flexion selon la norme EN1288-3.

Le chant ou la tranche d'une feuille est la face étroite et longue de la feuille rejoignant ses deux faces principales en son bord. Le façonnage selon l'invention est réalisé dans ou sur le chant d'une feuille de verre, ce qui signifie que l'érosion due au façonnage part du bord de la feuille pour aller en direction de la zone centrale de la feuille. Le façonnage peut concerner toute ou une partie seulement (cas d'une rainure) de la largeur du chant. Le façonnage peut consister en la réalisation d'une rainure dans le chant, de largeur inférieure à celle du chant, permettant à la plaque d'être assemblée pour former une paroi ou un mobilier, comme enseigné notamment par WO2007/135335. Le façonnage peut aussi consister à meuler la tranche d'un vitrage feuilleté pour que les bords de ses différentes feuilles de verre soient bien alignés. Pour ce faire, il suffit généralement de meuler le bord de la feuille qui dépasse de l'autre ou des autres. Ainsi, la plaque peut être un feuilleté associant plusieurs feuilles de verre minéral séparées par un matériau polymère, notamment en PVB, le façonnage étant réalisé sur toute la largeur du chant de la feuille renforcée thermiquement, de façon à aligner les bords des différentes feuilles de verre de la plaque. Notamment, toutes les feuilles de verre minéral du feuilleté peuvent être renforcées thermiquement, notamment elles peuvent toutes être trempées.

Le renforcement thermique appliqué à la feuille de verre est du type couramment réalisée par l'homme du métier. Il peut s'agir d'une semi-trempe (générant une contrainte de surface comprise dans le domaine allant de 40 et 90 MPa, en valeur absolue) ou d'une trempe (générant une contrainte de surface supérieure à 90 MPa en valeur absolue). Le renforcement thermique est appliqué par refroidissement rapide, généralement par soufflage d'air sur la feuille de verre préalablement chauffée à au moins 570°C, généralement au moins 600°C. Plus le renforcement thermique est fort, plus la contrainte de surface provoquée est élevée. Une feuille de verre trempée commercialisée a généralement une contrainte de surface d'au moins 90 MPa en valeur absolue. La contrainte de surface peut être déterminée par un appareil fonctionnant sur le principe de la polariscopie comme le polariscope Scalp-04, la valeur déterminée étant une moyenne de 5 mesures sur une surface principale de la feuille de verre et à au moins 20 cm du bord. Les valeurs de contrainte ci-dessus sont des valeurs absolues, puisque l'homme du métier peut aussi les exprimer avec un signe négatif.

De préférence, le renforcement thermique est suffisant pour que la valeur absolue de la contrainte de surface de la feuille soit supérieure à 90 MPa, et de préférence supérieure à 110 MPa et de préférence supérieure à 120 MPa (en valeur absolue).

La feuille de verre renforcée thermiquement peut avoir une épaisseur comprise dans le domaine allant de 1 à 20 mm, des épaisseurs standard étant 6, 8, 10, 12 mm. Cette feuille peut être incorporée dans une plaque dont l'épaisseur peut être comprise dans le domaine allant de 1 à 70 mm. La plaque peut être constituée d'une seule feuille de verre renforcée thermiquement. Habituellement une feuille de verre trempée à 90 MPa (valeur absolue de la contrainte de surface) et dont l'épaisseur est comprise dans le domaine allant de 6 à 12 mm (ce qui inclut les bornes de 6 et 12 mm), présente, avant tout meulage une résistance en flexion supérieure à 120 MPa aux 5% fractile. Le meulage selon l'invention est réalisé dans la zone de compression et sur une profondeur à partir du bord telle que la résistance en flexion aux 5% fractile reste supérieure à 120 MPa, et ce, de préférence après une durée d'au moins une semaine après ledit façonnage (conditions pendant cette durée d'au moins une semaine: en intérieur, à 20°C et avec un taux d'humidité relative de 50%). Ainsi, de préférence, la feuille est telle que la contrainte à rupture au 5% fractile est supérieure à 120 MPa après façonnage puis stockage à 20°C dans l'air à un taux d'humidité relative de 50%. Pour ce faire, il convient déjà que le renforcement thermique de la feuille soit suffisant pour qu'avant façonnage, sa contrainte à rupture au 5% fractile soit supérieure à 120 MPa. Le façonnage est réalisé par au moins une passe de meulage et sur une profondeur de verre à partir du bord suffisamment faible pour que la contrainte à rupture au 5% fractile reste supérieure à 120 MPa après ledit façonnage.

Avantageusement, l'épaisseur de la feuille de verre est d'au moins 6 mm et le renforcement thermique est suffisant pour que la contrainte de surface de la feuille soit supérieure à 100 MPa (en valeur absolue). Alors, la profondeur de façonnage à partir du bord peut généralement être d'au moins 2 mm.

Une passe de meulage est réalisée par une meule. Pour meuler la plaque, un déplacement relatif l'une par rapport à l'autre de la meule et de la plaque est exercé. Notamment, la plaque peut être fixe, et c'est la meule qui se déplace, pouvant même faire le tour de la plaque. Des machines de type CNC (conception à commande numérique) permettent un meulage selon cette variante. Egalement, la meule peut être fixe et c'est la plaque qui se déplace. Des machines de marque Bottero permettent un meulage selon cette variante.

La meule produit un meulage dont la largeur sur le verre peut aller jusqu'à 30 mm. Il s'agit ici de la largeur de contact à chaque instant entre la meule et la plaque.

Le façonnage est réalisé par au moins une passe de meulage, chaque passe étant de profondeur d'au plus 1,5 mm et de préférence d'au plus 1,2 mm à partir du bord.

Le matériel utilisé pour meuler ou polir le verre dans le cadre de la présente invention est identique à celui utilisé pour meuler ou polir du verre non-trempé thermiquement. Une rainure peut être réalisée à partir de disques abrasifs, ou de meules abrasives. Ces outils abrasifs sont entraînés en rotation et sont le cas échéant positionnés sur une tête pivotante ou inclinable. Ainsi, en inclinant l'outil par rapport à la normale du bord ou du chant de la plaque, et en combinant ce mouvement avec un mouvement d'avance, on obtient à la suite de plusieurs passes d'usinage une rainure au profil souhaité.

Le durcissement thermique produit de façon connue des contraintes de bord à la périphérie de la feuille de verre. Certains systèmes d'observations optiques permettent de mettre en évidence les contraintes au niveau des tranches de ces verres, tel que le dispositif de mesure de contraintes Sharples. L'observation du bord des verres renforcés thermiquement permet de mettre en évidence deux zones : 1) une première zone où le verre est en compression (on parle de zone de compression ou de barrière de compression ou de ceinture de compression), partant du bord du verre jusqu'à une profondeur spécifique P, puis 2) une seconde zone où le verre est en traction (on parle de zone de traction ou d'extension), au-delà de cette profondeur spécifique. La limite entre ces deux zones, à la profondeur spécifique à partir du bord du verre, apparait au dispositif Sharples sous la forme d'une ligne sombre, positionnée à quelques millimètres du bord du verre, généralement entre 2 et 25 mm du bord du verre. L'importance de la zone de compression est fonction de l'épaisseur du verre et du niveau de renforcement thermique. A titre d'exemple, pour un niveau de renforcement thermique de 110 MPa (valeur absolue de la contrainte de surface), la limite entre ces deux zones dans le cas d'un verre silicosodocalcique d'épaisseur 10 mm est mesurée à 6,5 mm du bord et celle d'un verre d'épaisseur 8 mm est mesurée à 4,6 mm du bord.

La barrière de compression constitue une enveloppe pour l'intégralité de la feuille de verre trempée. Pour se donner une marge de sécurité, le façonnage est réalisé sur une profondeur inférieure à 90% et de préférence inférieure à 80% de la profondeur de la zone de compression à partir du bord avant façonnage.

Toute feuille de verre durcie thermiquement comprise dans la plaque selon l'invention ne présente de préférence pas d'angle à 90°. En effet, de tels angles sont à l'origine de la casse de verres durcis thermiquement. C'est pourquoi les angles à 90° sont généralement chanfreinés ou arrondis. Notamment, les angles entre le chant de la feuille et les faces principales de la feuille sont de préférence chanfreinés ou arrondis avant le durcissement thermique. Si un façonnage doit être réalisé sur toute la hauteur du chant (c'est-à-dire toute la largeur de la tranche) après le durcissement thermique, ce qui doit mener à une réduction du chanfrein ou de l'arrondi, alors, il est préférable de refaire ou d'agrandir le chanfrein ou arrondi avant de réaliser ledit façonnage.

On préfère éviter que le façonnage selon l'invention (après durcissement thermique) ne mène à des angles à 90°. Le façonnage selon l'invention est de préférence conduit de sorte que des chanfreins relient des portions formant un angle de 90° entre elles.

Si on veut réaliser le façonnage de feuilles de verre après durcissement thermique, il est nécessaire de prendre en compte le recul de la barrière de sécurité (limite de la zone en compression) pour éviter les casses spontanées. En effet, lors du meulage, si la barrière de compression est dépassée, le verre renforcé thermiquement casse. A titre d'exemple, pour un verre de 12 mm renforcé thermiquement à 110 MPa (en valeur absolue), la zone de compression se trouve sur 8,4 mm à partir du bord du verre, et si l'on enlève par meulage 2 mm du bord de la feuille de verre sur toute la largeur du chant, la zone de compression ne se trouve plus que sur 6,4 mm à partir du bord du verre.

On a pu trouver de façon empirique que la profondeur de la zone en compression à partir du bord du verre, avant meulage selon l'invention, est également donnée par :

$$P' = ((½+2μ).e+2.(1-μ²).E/σ_c) \qquad \text{(Equation 1)}$$

dans laquelle

e est l'épaisseur de la feuille de verre,
$μ$ est le coefficient de Poisson du verre (0,22 pour un verre classique silicosodocalcique),
E est le Module d'Young du matériau de la feuille de verre (70GPa pour un verre classique silicosodocalcique),
$σ_c$ est la contrainte de surface représentant le niveau de renforcement thermique, notamment de trempe. C'est une valeur négative (exemple : pour une feuille trempée à 110 MPa, $σ_c$ vaut -110 Mpa).

Dans l'équation 1, les paramètres et les résultats sont en unités SI.

Ainsi, l'invention concerne également un procédé de fabrication d'une plaque comprenant une feuille de verre minéral renforcée thermiquement, comprenant le façonnage du chant de la feuille de verre après application du renforcement thermique et sur une profondeur inférieure à la profondeur P' calculée par l'équation 1 et de préférence inférieure à 90% et de préférence inférieure à 80% de la profondeur P' calculée par l'équation 1. Tous les autres aspects de l'invention figurant dans la présente demande (notamment tels que revendiqués) s'appliquent à cette plaque.

Afin de satisfaire la norme EN12150-1 des vitrages pour bâtiment, la profondeur du façonnage selon l'invention à partir du bord initial du verre est de préférence réalisé sur une profondeur à partir du bord du verre suffisamment faible pour que la contrainte à rupture en flexion au 5% fractile reste supérieure à 120 MPa après ledit façonnage. Dans tous les cas, la profondeur de reprise en façonnage ne dépasse de préférence pas 90% de la profondeur P de la zone en compression à partir du bord du verre avant façonnage, ce qui est fonction de l'épaisseur de verre et du niveau de trempe.

Dans le tableau 1 ci-dessous, on indique en fonction de l'épaisseur e et du degré de trempe $\sigma_c$ d'un verre monolithique silicosodocalcique de coefficient de poisson 0,22 et de module d'Young 71 GPa, l'épaisseur P', estimation de la zone de compression à partir du bord, calculée avec l'équation 1 ci-dessus. Dans la description qui précède, on a généralement donné des contraintes de surface en valeur absolue, mais l'homme du métier considère généralement qu'elles sont négatives et elles doivent en tout cas être rentrées dans la formule 1 ci-dessus avec un signe négatif. Elles sont notées dans le tableau 1 avec un signe négatif.

Tableau 1

| Epaisseur de la feuille trempée : 6mm | |
|---|---|
| Niveau de trempe | Profondeur P' zone de compression (mm) |
| -90MPa | 3,2 |
| -100MPa | 3,0 |
| -110MPa | 2,7 |
| **Epaisseur de la feuille trempée : 8mm** | |
| Niveau de trempe | Profondeur P' zone de compression (mm) |
| -90MPa | 5,1 |
| -100MPa | 4,8 |
| -110MPa | 4,6 |
| -120MPa | 4,3 |
| -130MPa | 4,1 |
| **Epaisseur de la feuille trempée : 10mm** | |
| Niveau de trempe | Profondeur P' zone de compression (mm) |
| -90MPa | 7,0 |
| -100MPa | 6,7 |
| -110MPa | 6,5 |
| -120MPa | 6,2 |
| -130MPa | 5,9 |
| -140MPa | 5,7 |
| -150MPa | 5,4 |
| **Epaisseur de la feuille trempée : 12mm** | |
| Niveau de trempe | Profondeur P' zone de compression (mm) |
| -90MPa | 8,9 |
| -100MPa | 8,6 |
| -110MPa | 8,4 |
| -120MPa | 8,1 |
| -130MPa | 7,8 |
| -140MPa | 7,5 |
| -150MPa | 7,3 |
| -160MPa | 7,0 |
| -170MPa | 6,7 |

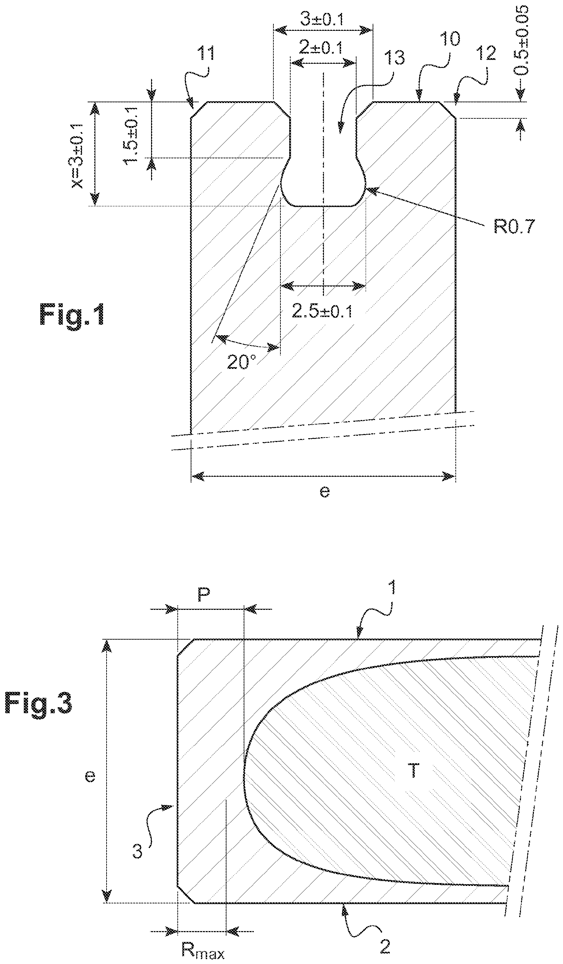

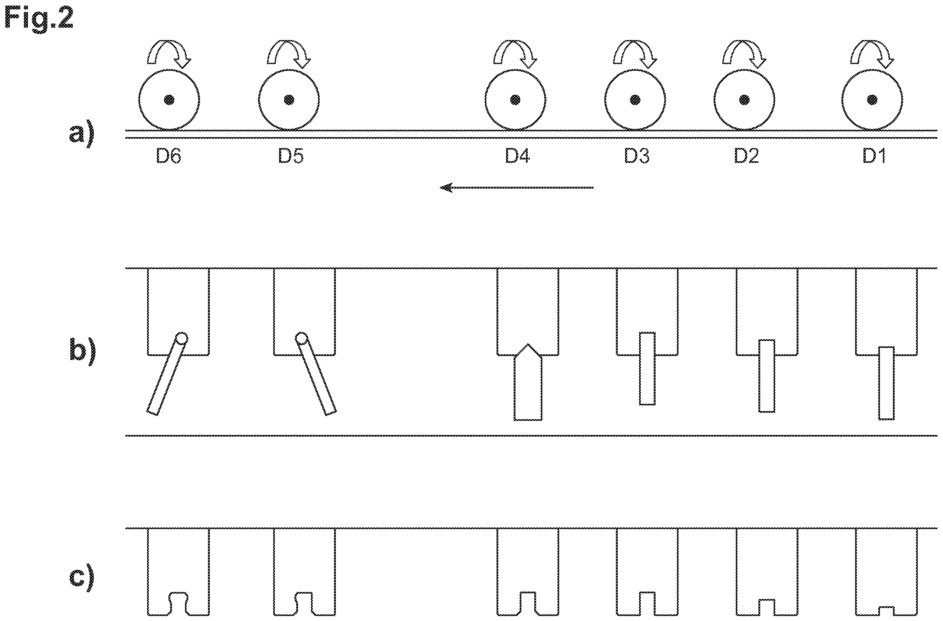

La figure 1 donne, en mm, les dimensions de la rainure 13 dite Clip'In® réalisée dans le chant 10 d'une feuille de verre trempée vue en coupe (verre en hachuré) d'épaisseur e. Les chanfreins 11 et 12 ont été réalisés avant la trempe. La rainure 13 elle-même a été réalisée après la trempe et selon le processus expliqué par la figure 2. La largeur (que l'on peut aussi appeler « hauteur ») du chant (c'est-à-dire de la tranche) correspond à l'épaisseur « e » de la feuille. La rainure a été réalisée sur une profondeur x de 3 mm à partir du bord 10 de la feuille.

La figure 2 schématise le procédé de réalisation de la rainure dite Clip'In®, ledit procédé étant réalisé de la droite vers la gauche sur cette figure, par intervention successive de six disques de meulage (D1 à D6), comme représenté en a). La forme et l'action de chaque disque sur la rainure est représentée en b) alors que l'évolution de la rainure au fur et à mesure de l'intervention des disques (de droite à gauche) est représentée en c).

La figure 3 représente une feuille de verre vue en coupe et parallèlement à ses faces principales 1 et 2. On a représenté en hachuré la ceinture de compression entourant la feuille. La zone de compression se trouve entre le bord 3 de la feuille et la distance P vers l'intérieur du verre. La zone non-hachurée T est en traction. La distance P est la plus petite distance entre le chant du verre et la limite entre la zone de compression et la zone en traction. Tout façonnage du verre à partir du bord, qu'il s'agisse d'un façonnage à plat de tout le chant 3 (toute la largeur du chant, soit sur toute l'épaisseur e de la feuille) ou un façonnage menant à une rainure dans le chant (cas de la figure 1), ne doit pas dépasser la distance P et de préférence 90% de la distance P, ni la profondeur $R_{max}$ au-delà de laquelle la résistance en flexion aux 5% fractile serait inférieure à 120 MPa.

### Exemples 1 et 2

Le façonnage d'un vitrage feuilleté a été réalisé avec les paramètres donnés dans le tableau 2. Le vitrage feuilleté associait deux feuilles de verre silicosodocalcique de 8 mm d'épaisseur chacune avec une feuille intercalaire en PVB de 1,52 mm d'épaisseur. Chaque feuille de verre avait été trempée pour produire une contrainte de surface de 110 MPa (en valeur absolue). Ces deux verres étaient associés dans le vitrage feuilleté avec un certain décalage de leur bord, de 2 mm. Le meulage a été réalisé dans un cas (exemple 1) avec une machine CNC faisant le tour du vitrage feuilleté et dans l'autre cas (machine Bottero) avec une machine utilisant des disques différents.

Tableau 2

| Exemple N° | 1 | 2 |
|---|---|---|
| Machine | CNC | Bottero |
| Orientation | Horizontale | Verticale |
| Forme du vitrage feuilleté | Formes non rectangulaires, formes non linéaires, trous, petites tailles | Formes rectangulaires |
| Qualité du poli | + | +++ |
| Epaisseur totale enlevée au meulage | 2 mm | 2 mm |
| Détails sur chaque passe | 1ère passe enlève 1,5mm | 1er disque enlève 1,2mm |
| | 2ème passe enlève 0,2 mm | 2ème disque enlève 0,6 mm |
| | 3ème passe enlève 0,2 mm | 3ème disque enlève 0,2 mm |
| | 4ème passe enlève 0,1 mm | 4ème disque poli uniquement |
| | 5ème passe poli uniquement | 5ème disque poli uniquement |
| Vitesse d'avance de la meule | De 250 à 400 mm par minutes | 500 mm par minute |

Après meulage dans ces conditions, les décalages de bords apparaissant après assemblage sont corrigés et l'aspect esthétique du poli des bords est conforme aux attentes des clients. Les verres n'ont pas cassé suite au meulage réalisé. En effet, la zone de barrière de compression s'étendait jusqu'à environ 4,6 mm du bord, ce qui est bien supérieur au meulage réalisé.

**Exemples 3 à 5**

Des feuilles de verre monolithiques de dimension 1100 mm x 360 mm x 10 mm trempées à 110 MPa (contrainte de surface en valeur absolu) ont été réalisées. Leur chant a ensuite été meulé sur toute sa hauteur (c'est-à-dire toute l'épaisseur de la vitre)_et sur l'intégralité de ses deux longueurs (celles mises en contrainte lors des essais de flexion) et dans les conditions suivantes :

Exemple 3 : pas de meulage (référence) ;

Exemple 4 : meulage de 3 mm réalisé en 3 passes de 1 mm chacune;

Exemple 5 : meulage de 4 mm réalisé en 4 passes de 1 mm chacune ;

Les vitrages des exemples 4 et 5 n'ont pas cassé au meulage. Des essais de flexion 4 point conformément à la norme EN1288-3, ont été réalisés. Après traitement selon un modèle de Weibull, les contraintes à rupture aux 5% fractile (exprimé en MPa), sont :

Tableau 3

| Exemple n° | Profondeur de meulage (mm) | Rupture aux 5% fractile (MPa) |
|---|---|---|
| 3 (référence) | - | 151 |
| 4 | 3 mm | 128 |
| 5 | 4 mm | 120 |

La contrainte à rupture aux 5% fractile diminue donc d'environ 8 MPa par millimètre de matière enlevé en profondeur. Avec un niveau de trempe (contrainte de compression en peau) de 110 MPa, un enlèvement de matière de 4 mm conduit donc à une contrainte à rupture au 5 % fractile de 120 MPa, mesuré en flexion selon la norme EN1288-3, ce qui est conforme à la norme EN12150 des vitrages trempés pour bâtiment.

**Exemples 6 et 7**

Une rainure du type Clip'In® a été réalisée dans une feuille de verre monolithique trempée à 110 MPa en contrainte de surface (en valeur absolue). La feuille de verre avait une épaisseur de 10 mm, et des dimensions de faces principale de 1100 x 360 mm. La rainure avait la forme et les dimensions indiquées sur la figure 1. Cette rainure a été réalisée en 6 passes par 6 passages de disques selon le processus représenté sur la figure 2. On a comparé le cas d'un rainurage avant trempe (exemple 6) avec celui d'un rainurage après trempe (exemple 7). La contrainte à rupture aux 5% fractile est de 124 MPa pour la configuration « façonnage avant trempe » et de 114 MPa pour la configuration « façonnage après trempe ». Pour ce dernier cas, au bout de 3 mois, la contrainte à rupture aux 5% fractile est passée à 135 MPa, traduisant une augmentation de 18%.

**Exemples 8 à 15 (influence du degré de trempe)**

Ces résultats portent sur l'influence du niveau de compression en peau initial (c'est-à-dire du niveau de trempe) et de la profondeur de matière enlevée sur la contrainte à rupture aux 5% fractile. Le degré de trempe est donné par la valeur de contrainte de surface. Les échantillons étaient des feuilles de verre monolithiques de dimension 1100 mm x 360 mm x 10 mm trempées à différents niveaux de trempe. Les meulages étaient réalisés par passes de 1 mm sur toute la hauteur du chant (c'est-à-dire toute l'épaisseur de la vitre) et sur les deux longueurs des vitres (celles mises en contraintes lors des essais de flexion). Par exemple, pour une profondeur de meulage total de 3 mm, trois passes successives de 1 mm chacune ont été réalisées. Le tableau 4 donne les résultats de contrainte à rupture aux 5% fractile en MPa. Ils permettent d'anticiper la conformité des verres trempés à la norme EN 12150-1, en fonction de la quantité de matière enlevée.

Tableau 4

| | | Valeur absolue de Contrainte de surface (représentant le degré de trempe) | | |
|---|---|---|---|---|
| | | 90 MPa | 110 MPa | 130 MPa |
| **Profondeur de meulage total** | **0 mm (référence)** | *Exemple 8 : 135* | *Exemple 9 : 150* | |
| | **2 mm** | | | *Exemple 10 : 155* |
| | **3 mm** | *Exemple 11 : 115* | *Exemple 12 : 125* | |
| | **4 mm** | *Exemple 13 : 105* | *Exemple 14 : 120* | *Exemple 15 : 135* |

A partir de ces valeurs, et si l'on considère qu'il convient de ne pas descendre en-dessous de 120 MPa en contrainte à rupture aux 5% fractile, on estime que pour un verre de 10 mm d'épaisseur et pour une trempe initiale à 90 MPa, la limite d'enlèvement de matière est de 2mm ; pour une trempe initiale à 110 MPa, la limite d'enlèvement de matière est de 4mm ; enfin, pour une trempe initiale à 130 MPa, la limite d'enlèvement de matière est supérieure à 4 mm.

Au bout de trois mois, la contrainte à rupture aux 5% fractile a augmenté dans tous les cas. Dans le cas de l'essai de référence (pas de meulage) trempé à 110 MPa (exemple 8), la valeur de contrainte à rupture aux 5% fractile passe de 150 MPa à 175 MPa (+16%) au bout de 3 mois. Dans le cas de l'essai façonné sur 3 mm de profondeur et trempé à 110 MPa (exemple 11), la valeur de contrainte à rupture aux 5% fractile passe de 125 MPa à 130 MPa (+4%) au bout de 3 mois.

## Revendications

1. Procédé de fabrication d'une plaque comprenant une feuille de verre minéral renforcée thermiquement, comprenant le façonnage du chant de la feuille de verre après application du renforcement thermique et sur une profondeur à partir du bord, inférieure à celle de la zone de compression.

2. Procédé selon la revendication précédente, **caractérisé en ce que** le façonnage est réalisé sur une profondeur inférieure à 90% de la profondeur de la zone de compression à partir du bord avant façonnage.

3. Procédé selon la revendication précédente, **caractérisé en ce que** le façonnage est réalisé sur une profondeur inférieure à 80% de la profondeur de la zone de compression à partir du bord avant façonnage.

4. Procédé selon la revendication 1, **caractérisé en ce que** le façonnage est réalisé sur une profondeur inférieure à 90% de la profondeur P' donnée par :

$$P' = ((\tfrac{1}{2}+2\mu).e+2.(1-\mu^2).E/\sigma_c)$$

dans laquelle

e est l'épaisseur de la feuille de verre,
$\mu$ est le coefficient de Poisson du verre,
E est le Module d'Young du verre,
$\sigma_c$ est la contrainte de surface exprimée avec un signe négatif.

5. Procédé selon l'une des revendications précédentes, **caractérisé en ce que** le renforcement thermique est suffisant pour que la valeur absolue de la contrainte de surface de la feuille soit supérieure à 90 MPa.

6. Procédé selon la revendication précédente, **caractérisé en ce que** le renforcement thermique est suffisant pour que la valeur absolue de la contrainte de surface de la feuille soit supérieure à 110 MPa et de préférence supérieure à 120 MPa.

7. Procédé selon l'une des revendications précédentes, **caractérisé en ce que** la feuille de verre a une épaisseur comprise dans le domaine allant de 6 à 12 mm.

**8.** Procédé selon l'une des revendications précédentes, **caractérisé en ce que** le renforcement thermique de la feuille est suffisant pour qu'avant façonnage, sa contrainte à rupture au 5% fractile soit supérieure à 120 MPa.

**9.** Procédé selon la revendication précédente, **caractérisé en ce que** le façonnage est réalisé par au moins une passe de meulage, ledit façonnage étant réalisé sur une profondeur de verre à partir du bord suffisamment faible pour que la contrainte à rupture au 5% fractile reste supérieure à 120 MPa après ledit façonnage.

**10.** Procédé selon la revendication précédente, **caractérisé en ce que** la contrainte à rupture au 5% fractile est supérieure à 120 MPa après façonnage puis stockage au moins une semaine à 20°C dans l'air à un taux d'humidité relative de 50%.

**11.** Procédé selon l'une des revendications précédentes, **caractérisé en ce que** le façonnage est réalisé par au moins une passe de meulage, chaque passe étant de profondeur d'au plus 1,5 mm et de préférence d'au plus 1,2 mm à partir du bord.

**12.** Procédé selon la revendication précédente, **caractérisé en ce que** la plaque est un feuilleté associant plusieurs feuilles de verre minéral séparées par un matériau polymère, notamment en PVB, **caractérisé en ce que** le façonnage est réalisé sur toute la largeur du chant de la feuille renforcée thermiquement, de façon à aligner les bords des différentes feuilles de verre de la plaque.

**13.** Procédé selon la revendication précédente, **caractérisé en ce que** toutes les feuilles de verre minéral du feuilleté sont renforcées thermiquement, notamment trempées.

**14.** Procédé selon l'une des revendications précédentes, **caractérisé en ce que** le façonnage est une rainure réalisée dans le chant de la feuille et selon une largeur inférieure à l'épaisseur de la feuille.

**15.** Procédé selon l'une des revendications 1 à 13, **caractérisé en ce que** le façonnage est réalisé sur toute la largeur du chant de la feuille de verre.

**16.** Procédé selon l'une des revendications précédentes, **caractérisé en ce que** l'épaisseur de la feuille de verre est d'au moins 6 mm, la profondeur de façonnage est d'au moins 2 mm, le renforcement thermique étant suffisant pour que la valeur absolue de la contrainte de surface de la feuille soit supérieure à 100 MPa.

**Patentansprüche**

**1.** Verfahren zur Herstellung einer Platte, umfassend eine thermisch verfestigte Mineralglasscheibe, umfassend das Abschrägen der Kante der Glasscheibe nach Ausführung der thermischen Verfestigung und über eine Tiefe ab dem Rand, die geringer als die der Kompressionszone ist.

**2.** Verfahren nach vorhergehendem Anspruch, **dadurch gekennzeichnet, dass** das Abschrägen über eine Tiefe von weniger als 90 % der Tiefe der Kompressionszone ab dem Rand vor dem Abschrägen durchgeführt wird.

**3.** Verfahren nach vorhergehendem Anspruch, **dadurch gekennzeichnet, dass** das Abschrägen über eine Tiefe von weniger als 80 % der Tiefe der Kompressionszone ab dem Rand vor dem Abschrägen durchgeführt wird.

**4.** Verfahren nach Anspruch 1, **dadurch gekennzeichnet, dass** das Abschrägen über eine Tiefe von weniger als 90 % der Tiefe P' durchgeführt wird, die gegeben ist durch:

$$P' = ((^1/_2 + 2\mu).e + 2.(1-\mu^2).E/\sigma_c)$$

wobei

e die Stärke der Glasscheibe ist,
$\mu$ das Poisson-Verhältnis des Glases ist,

E der Elastizitätsmodul des Glases ist,
$\sigma_c$ die mit einem negativen Vorzeichen ausgedrückte Oberflächenspannung ist.

5. Verfahren nach einem der vorhergehenden Ansprüche, **dadurch gekennzeichnet, dass** die thermische Verfestigung ausreicht, damit der absolute Wert der Oberflächenspannung der Scheibe über 90 MPa beträgt.

6. Verfahren nach vorhergehendem Anspruch, **dadurch gekennzeichnet, dass** die thermische Verfestigung ausreicht, damit der absolute Wert der Oberflächenspannung der Scheibe über 110 MPa und vorzugsweise über 120 MPa beträgt.

7. Verfahren nach einem der vorhergehenden Ansprüche, **dadurch gekennzeichnet, dass** die Glasscheibe eine Stärke im Bereich von 6 bis 12 mm hat.

8. Verfahren nach einem der vorhergehenden Ansprüche, **dadurch gekennzeichnet, dass** die thermische Verfestigung der Scheibe ausreicht, damit vor dem Abschrägen ihre Bruchspannung bei 5-%-Fraktil über 120 MPa beträgt.

9. Verfahren nach vorhergehendem Anspruch, **dadurch gekennzeichnet, dass** das Abschrägen in mindestens einem Schleifdurchgang durchgeführt wird, wobei das Abschrägen über eine Glastiefe ab dem Rand ausreichend schwach durchgeführt wird, damit nach dem Abschrägen die Bruchspannung bei 5-%-Fraktil weiterhin über 120 MPa beträgt.

10. Verfahren nach vorhergehendem Anspruch, **dadurch gekennzeichnet, dass** die Bruchspannung bei 5-%-Fraktil nach Abschrägung, danach Lagerung für mindestens eine Woche bei 20 °C an der Luft bei einer relativen Luftfeuchtigkeit von 50 % über 120 MPa beträgt.

11. Verfahren nach einem der vorhergehenden Ansprüche, **dadurch gekennzeichnet, dass** das Abschrägen in mindestens einem Schleifdurchgang durchgeführt wird, wobei jeder Durchgang eine Tiefe von höchstens 1,5 mm und vorzugsweise von höchstens 1,2 mm ab dem Rand aufweist.

12. Verfahren nach vorhergehendem Anspruch, **dadurch gekennzeichnet, dass** die Platte ein Verbund ist, der mehrere durch ein Polymermaterial, insbesondere PVB, getrennte Mineralglasscheiben kombiniert, **dadurch gekennzeichnet, dass** das Abschrägen über die gesamte Breite der Kante der thermisch verfestigten Scheibe durchgeführt wird, um die Ränder der verschiedenen Glasscheiben der Platte auszurichten.

13. Verfahren nach vorhergehendem Anspruch, **dadurch gekennzeichnet, dass** alle Mineralglasscheiben des Verbundes thermisch verfestigt, insbesondere thermisch gehärtet, werden.

14. Verfahren nach einem der vorhergehenden Ansprüche, **dadurch gekennzeichnet, dass** die Abschrägung eine Nut in der Kante der Scheibe und in einer Breite ist, die geringer ist als die Stärke der Scheibe ist.

15. Verfahren nach einem der Ansprüche 1 bis 13, **dadurch gekennzeichnet, dass** das Abschrägen über die gesamte Breite der Kante der Glasscheibe erfolgt.

16. Verfahren nach einem der vorhergehenden Ansprüche, **dadurch gekennzeichnet, dass** die Stärke der Glasscheibe mindestens 6 mm beträgt, die Tiefe der Abschrägung mindestens 2 mm beträgt, wobei die thermische Verfestigung ausreichend ist, damit der absolute Wert der Oberflächenspannung der Scheibe über 100 MPa beträgt.

**Claims**

1. A process for manufacturing a plate comprising a heat-strengthened mineral glass sheet, comprising the shaping of the edge face of the glass sheet after application of the heat strengthening and over a depth from the edge smaller than the depth of the compression zone.

2. The process as claimed in the preceding claim, **characterized in that** the shaping is carried out over a depth of less than 90% of the depth of the compression zone from the edge before shaping.

3. The process as claimed in the preceding claim, **characterized in that** the shaping is carried out over a depth of less than 80% of the depth of the compression zone from the edge before shaping.

4. The process as claimed in claim 1, **characterized in that** the shaping is carried out over a depth of less than 90% of the depth P' given by:

$$P' = ((\tfrac{1}{2}+2\mu).e+2.(1-\mu^2).E/\sigma_c)$$

wherein

e is the thickness of the glass sheet,
$\mu$ is the Poisson's ratio of the glass,
E is the Young's modulus of the glass,
$\sigma_c$ is the surface stress expressed with a negative sign.

5. The process as claimed in one of the preceding claims, **characterized in that** the heat strengthening is sufficient that the absolute value of the surface stress of the sheet is greater than 90 MPa.

6. The process as claimed in the preceding claim, **characterized in that** the heat strengthening is sufficient that the absolute value of the surface stress of the sheet is greater than 110 MPa and preferably greater than 120 MPa.

7. The process as claimed in one of the preceding claims, **characterized in that** the glass sheet has a thickness within the range extending from 6 to 12 mm.

8. The process as claimed in one of the preceding claims, **characterized in that** the heat strengthening of the sheet is sufficient that, before shaping, its fracture stress at the 5% fractile is greater than 120 MPa.

9. The process as claimed in the preceding claim, **characterized in that** the shaping is carried out by at least one grinding pass, said shaping being carried out over a depth of glass from the edge that is small enough that the fracture stress at the 5% fractile remains greater than 120 MPa after said shaping.

10. The process as claimed in the preceding claim, **characterized in that** the fracture stress at the 5% fractile is greater than 120 MPa after shaping then storage at least one week at 20°C in air at a degree of relative humidity of 50%.

11. The process as claimed in one of the preceding claims, **characterized in that** the shaping is carried out by at least one grinding pass, each pass being of a depth of at most 1.5 mm and preferably of at most 1.2 mm from the edge.

12. The process as claimed in the preceding claim, **characterized in that** the plate is a laminate combining several mineral glass sheets separated by a polymer material, in particular made of PVB, **characterized in that** the shaping is carried out over the entire width of the edge face of the heat-strengthened sheet, so as to align the edges of the various glass sheets of the plate.

13. The process as claimed in the preceding claim, **characterized in that** all the mineral glass sheets of the laminate are heat strengthened, in particular tempered.

14. The process as claimed in one of the preceding claims, **characterized in that** the shaping is a groove made in the edge face of the sheet and over a width smaller than the thickness of the sheet.

15. The process as claimed in one of claims 1 to 13, **characterized in that** the shaping is carried out over the entire width of the edge face of the glass sheet.

16. The process as claimed in one of the preceding claims, **characterized in that** the thickness of the glass sheet is at least 6 mm, the depth of shaping is at least 2 mm, the heat strengthening being sufficient that the absolute value of the surface stress of the sheet is greater than 100 MPa.

Fig.1

Fig.3

Fig.2

## RÉFÉRENCES CITÉES DANS LA DESCRIPTION

**Documents brevets cités dans la description**

- WO 2007135335 A
- WO 2008020509 A1